Europäisches Patentamt

European Patent Office

Office européen des brevets

(11) Veröffentlichungsnummer: **0 044 980**
**B1**

(19)

(12)

# EUROPÄISCHE PATENTSCHRIFT

(45) Veröffentlichungstag der Patentschrift:
17.04.85

(21) Anmeldenummer: 81105254.7

(22) Anmeldetag: 07.07.81

(51) Int. Cl.⁴: **G 01 F 11/24,** G 01 F 11/20,
G 05 D 11/02, B 01 J 4/02,
B 29 C 31/06

(54) Einrichtung zum Dosieren von körnigen oder pulverförmigen Stoffen.

(30) Priorität: 25.07.80 DE 3028260

(43) Veröffentlichungstag der Anmeldung:
03.02.82 Patentblatt 82/5

(45) Bekanntmachung des Hinweises auf die Patenterteilung:
17.04.85 Patentblatt 85/16

(84) Benannte Vertragsstaaten:
AT BE CH DE FR GB IT LI LU NL SE

(56) Entgegenhaltungen:
DE - A - 1 947 405
DE - A - 2 657 857
DE - B - 1 424 089

(73) Patentinhaber: Colortronic Reinhard + Co. KG,
Otto-Hahn-Strasse 18-20, D-6382 Friedrichsdorf (DE)

(72) Erfinder: Reinhard, Max, Kirschblütenweg 7, D-6380 Bad
Homburg (DE)
Erfinder: Kornmayer, Horst, Mondorfer Weg 19,
D-6380 Bad Homburg (DE)

(74) Vertreter: Lehn, Werner, Dipl.-Ing. et al, Hoffmann, Eitle
& Partner Patentanwälte Arabellastrasse 4 (Sternhaus),
D-8000 München 81 (DE)

EP 0 044 980 B1

## Beschreibung

Die Erfindung betrifft eine Einrichtung zum Dosieren von körnigen oder pulverförmigen Stoffen in den Mischbehälter einer Kunststoffverarbeitungsmaschine nach dem Oberbegriff der Patentansprüche 1 bzw. 2.

Eine derartige Dosiereinrichtung ist in der DE-A-2 657 857 beschrieben. Bei der Entnahme von Teilmengen von körnigen oder pulverförmigen Stoffen aus einer Dosierstation, die direkt am Mischbehälter der Kunststoffverarbeitungsmaschine befestigt ist, ging man bisher so vor, daß man die Verbindung löste und ein oder mehrere Teilmengen in einen Meßbehälter dosierte, um das Gewicht dieser Teilmengen genau bestimmen zu können und so das Dosierverhältnis der verschiedenen Stoffe für ein bestimmtes auf einer Kunststoffverarbeitungsmaschine zu fertigendes Spritzprodukt festzulegen.

Der Betrieb einer derartigen Dosiereinrichtung ist zeitraubend, da die Dosierstation wenigstens vorübergehend vom Mischbehälter über der Kunststoffverarbeitungsmaschine gelöst und anschließend wieder daran befestigt werden muß. Um diese vorübergehende Entfernung der Dosierstation vom Mischbehälter zu bewerkstelligen, sind auch bereits automatische Hubvorrichtungen bekanntgeworden, mittels derer eine oder mehrere Dosierstationen vom Ort ihres Einsatzes auf dem Deckel des Mischbehälters, beispielsweise pneumatisch, um denjenigen Abstand angehoben werden, der notwendig ist, um die Proben zu entnehmen. Diese Hubarbeit auf eine Höhe von 20 bis 30 cm über dem Deckel des Mischbehälters erfordert eine aufwendige zusätzliche Einrichtung und läßt sich nicht in jedem Fall realisieren, da die Bauhöhe über den Dosierstationen am Ort des Einsatzes der Spritzgußmaschinen häufig beschränkt ist.

Um eine genaue Bestimmung der in den einzelnen Kammervolumina der Dosierscheibe von Scheibendosierern enthaltenen Teilmengen zu erhalten, ging man daher bisher so vor, daß man eine bestimmte Anzahl von Teilmengen, beispielsweise 10, in einem getrennten Meßbehälter auffing, um das Gewicht dieser Teilmengen zu bestimmen und ausgehend davon die Dosiervorrichtung einzustellen. Es versteht sich, daß eine derartige Maßnahme noch zeitaufwendiger und damit teurer wird, wenn an einem Mischbehälter mehrere Dosierstationen angeflanscht sind, beispielsweise eine Dosierstation für die Hauptkomponente des Kunststoffs, eine zweite für Regenerat und eine dritte für Pigment. In einem solchen Fall müssen das Entnehmen und die Gewichtsbestimmung dreifach durchgeführt werden.

Bei einer weiteren volumetrisch arbeitenden Dosiermaschine mit selbsttätiger Gewichtskorrektur gemäß der DE-C-1 424 089 sind besondere Meßkammern vorgesehen, die mittels einer Kontrollmeßeinrichtung selbsttätig entsprechend dem wechselnden Schüttgewicht des in die Maschine gelangenden Schüttgutes verstellt werden. Diese Einrichtung enthält eine verstellbare Kontrollmeßkammer und eine dieser zugeordnete Waage, die entsprechende Steuerimpulse abgeben kann. Wenn bei der Wägung des in die Kontrollmeßkammer eingeführten Schüttgewichts mittels der Waage eine Abweichung von der Vorgabe festgestellt wird, kann so durch einen einfachen Steuerimpuls eine entsprechend angepaßte mechanische Verstelleinrichtung angetrieben werden, wodurch die teleskopartig gestaltete Meßkammer zusammen mit einer Kontrollmeßkammer vergrößert bzw. verkleinert wird. Wenn auch bei der letztgenannten vorbekannten Dosiereinrichtung die Notwendigkeit entfällt, die einzelnen Dosierstationen zumindest vorübergehend vom Mischtrichter der Kunststoffverarbeitungsmaschine entfernen zu müssen, so steht doch der erforderliche mechanische Aufwand in keinem vernünftigen Verhältnis zur Aufgabe der Erfindung. Diese Aufgabe besteht darin, die eingangs genannte Einrichtung so zu gestalten, daß mit ihr das Entnehmen von Teilmengen des zuzudosierenden Stoffes vereinfacht und rascher durchführbar ist, wobei eine oder mehrere Dosierstationen auf dem Mischtrichter der Kunststoffverarbeitungsmaschine verbleiben können und praktisch während des laufenden Betriebes der Einrichtung die Dosiergenauigkeiten der einzelnen Komponenten überprüfbar sind, die zu diesem Zweck kurzzeitig entnommen, einer Kontrollwägung zugeführt und anschließend in den gleichen Mischzyklus wieder eingegeben werden.

Erfindungsgemäß wird diese Aufgabe mit einer Einrichtung mit den Merkmalen gemäß den Patentansprüchen 1 oder 2 erreicht. Eine derart gestaltete Einrichtung erlaubt dem die Kunststoffverarbeitungsmaschine Bedienenden kurzfristig das gewünschte Dosierverhältnis für eine bestimmte Fertigung einzustellen.

Die Erfindung wird in der folgenden Beschreibung anhand der in der Zeichnung dargestellten beiden Ausführungsbeispiele näher erläutert. Es zeigt

Fig. 1 einen Mischbehälter zum Mischen einer Kunststoffhauptkomponente mit einem Zusatzstoff, der über eine seitlich angeflanschte Dosierstation zugeführt wird, wobei diese Dosierstation eine erfindungsgemäße Entnahmevorrichtung aufweist;

Fig. 2 einen Mittellängsschnitt durch die erfindungsgemäße Entnahmeeinrichtung gemäß Fig. 1 in vergrößertem Maßstab;

Fig. 3 eine Unteransicht der Entnahmeeinrichtung gemäß Fig. 2;

Fig. 4 ein zweites Ausführungsbeispiel der erfindungsgemäßen Entnahmeeinrichtung, die hier durch eine Art Schubfach mit entfernbarem Boden zwischen Dosierbehälter und Mischbehälter gebildet ist; und

Fig. 5 eine Unteransicht der Entnahmeeinrichtung gemäß Fig. 4.

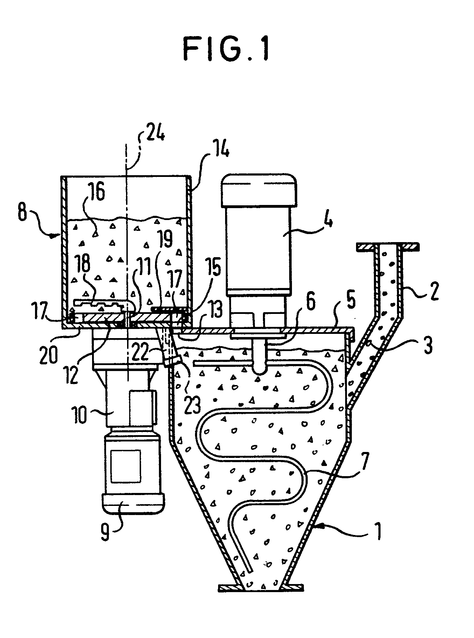

Wie man aus Fig. 1 erkennt, trägt der Mischbehälter 1, der über den seitlichen Zulaufstutzen 2 mit der Hauptkomponente 3 des Kunststoffs aus einem in der Zeichnung nicht dargestellten Vorratsbehälter beschickt wird, einen Motor 4 auf seinem Deckel 5. Von der Achse 6 des Motors wird der Rührwerksflügel 7 angetrieben.

Am linken Rand ist eine Dosierstation 8 am Deckel 5 angesetzt. Die Dosierstation 8 wird von einem Elektromotor 9 mit vorgeschaltetem Getriebe 10 angetrieben. Auf der Achse 11 des Getriebemotors 9, 10 sitzt die gelochte Dosierscheibe 12. Über der Öffnung 13 im Deckel 5 des Mischbehälters befindet sich eine damit korrespondierende Öffnung 15 im Boden 20 des Behälters 14 der Dosierstation 8, die mit der Öffnung 13 fluchtet. Über dem Boden 20 des Behälters 14 für den Zusatzstoff 16 sitzt die Lochscheibe 12, die von der Achse 11 des Getriebemotors 9, 10 angetrieben wird. Die Lochscheibe 12 weist auf ihrem Kreisumfang in bekannter Weise eine Anzahl von Durchbrechungen 17 auf, die sich bei der Drehbewegung der Lochscheibe 12 mit dem Zusatzstoff 16 füllen, der im Behälter 14 durch kleine Dreiecke gekennzeichnet ist. Wenn eine der Durchbrechungen 17 mit den Öffnungen 13, 15 fluchtet, fließt die entsprechende abgemessene Menge des Zusatzstoffes 16 in den Freiraum unter dem Deckel 5 des Mischbehälters und wird im Mischbehälter 1 mit der Hauptkomponente 3 des Kunststoffes vermischt, der in der Zeichnung durch kleine Kreise markiert ist.

Der Rührarm 18, der mit der Drehachse 11 verbunden sein kann, sorgt dafür, daß ein Zusammenbacken des Dosiergutes im Behälter 14 vermieden wird. Durch die Abdeckung 19 ist sichergestellt, daß kein Zusatzstoff 16 direkt durch die Öffnungen 17, 15, 13 in den Mischbehälter 1 durchfallen kann, sondern jeweils nur die in einer abgeschlossenen Kammer 17 dosierte Menge des Zusatzstoffes 16, sobald diese Kammer sich durch die Öffnungen 15, 13 in den Mischbehälter 1 entleeren kann.

Die beschriebene Einrichtung zum Zudosieren von körnigen oder pulverförmigen Stoffen in den Mischtrichter einer Kunststoffverarbeitungsmaschine bringt zufriedenstellende Ergebnisse, da durch die vielen kleinen Teilschritte der volumetrischen Zudosierung des Zusatzstoffes 16 eine recht gute Dosiergenauigkeit des Zusatzstoffes, bezogen auf die Kunststoffhauptkomponente 3, erzielbar ist. Eine gewisse Schwierigkeit bei der beschriebenen Dosierstation ergibt sich jedoch beim Einstellen dieser Station dadurch, daß man zunächst die volumetrisch abgetrennten Teilmengen bestimmen muß, die durch eine Dosierzelle, beispielsweise das Volumen der Durchbrechung 17 in der Lochscheibe 12 bei einem bestimmten Schüttgewicht, mitgenommen werden. Zu diesem Zweck wurde bisher die Dosierstation 8 vom Deckel 5 des Mischbehälters 1 entfernt und eine gewisse Anzahl von Teilmengen aus den Durchbrechungen 17 in der Lochscheibe 12 entnommen, in einem Meßbehälter aufgefangen und gewogen. Hier schafft nun die erfindungsgemäße Einrichtung Abhilfe, indem man eine oder mehrere der volumetrisch von der Hauptmenge des Stoffes 16 bereits abgetrennten Teilmengen vor ihrer Abgabe von der Dosierstation in den Mischbehälter 1 sammelt, wobei die am Mischbehälter befestigte Dosierstation nicht bewegt zu werden braucht und die gesammelten Teilmengen zur Gewichtsbestimmung den besonderen Entnahmevorrichtungen entnommen werden können.

Dabei kann man in einfacher Weise in dem Boden 20 des Behälters 14 neben der Öffnung 15 eine weitere Öffnung 21 vorsehen, an die ein schräggestellter Rohrstutzen 22 angesetzt ist, welcher mit einem Deckel 23 an seinem unteren Ende oder wahlweise mit einem Schieber 23a direkt unter der Dosierscheibe 12 an seinem oberen Ende oder auch mittels beider Verschlüsse gleichzeitig verschlossen werden kann.

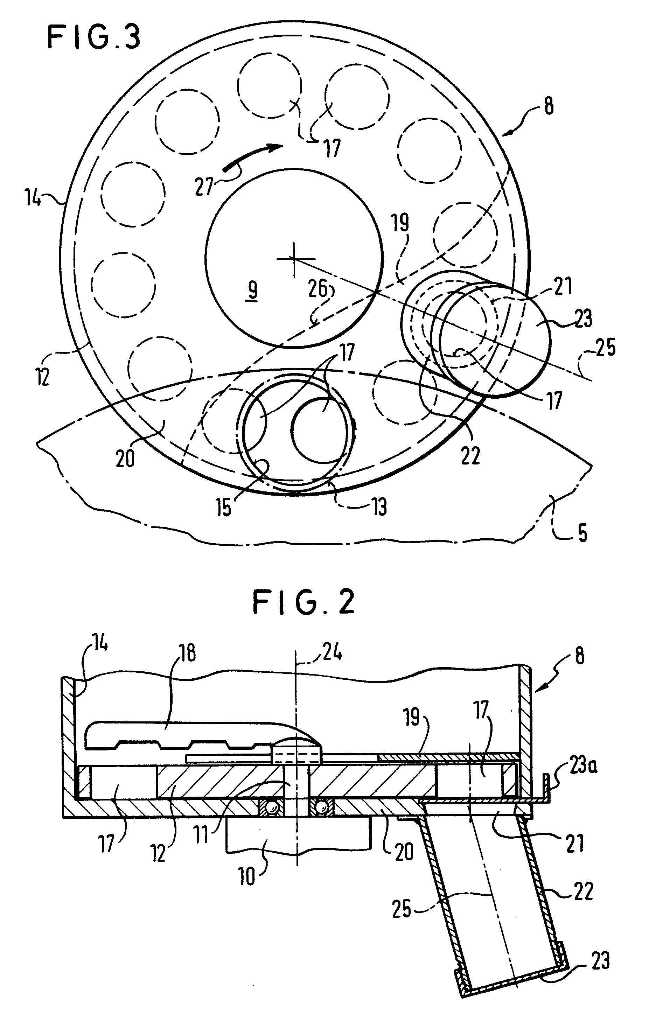

Weitere Einzelheiten dieser Entnahmevorrichtung ergeben sich aus den Fig. 2 und 3. Fig. 2 zeigt einen Mittellängsschnitt durch die Dosierstation 8 und zwar durch die Achse 24 des Behälters 14 und die Achse 25 des schrägen Rohrstutzens 22.

Das Volumen des Rohrstutzens 22 ist bei dieser Ausführungsform der Entnahmevorrichtung zweckmäßigerweise so gestaltet, daß beispielsweise zehn Chargen, d. h. 10 Volumina der Kammer 17 in der Lochscheibe 12 von dem Rohrstutzen 22 aufgenommen werden können.

Sowohl die Öffnung 21 als auch die Öffnung 15 müssen unter der Abdeckung 19 angeordnet sein, deren Randkontur 26 in Fig. 3 gestrichelt eingezeichnet ist. Der Pfeil 27 gibt die Drehrichtung der Lochscheibe 12 an, dergestalt, daß eine Zelle bzw. Durchbrechung 17 in der Lochscheibe 12 in Drehrichtung zuerst über die Öffnung 21 im Boden 20 des Behälters 14 zu liegen kommt und sich dort in den Rohrstutzen 22 entlädt, wenn bei Anordnung des Schiebers 23a dieser geöffnet ist. Nach einer vorgegebenen Anzahl von Umdrehungen der Lochscheibe 10 wird die Probe entnommen und gewogen. Anschließend füllt man den aus dem schrägen Rohrstutzen 22 und dem Deckel 23 gebildeten Behälter und die Dosierung erfolgt in der oben beschriebenen Weise durch die Öffnung 15 und 13 in den Mischbehälter 1 hinein. Es versteht sich, daß der Deckel 23 auch entfallen kann, wenn man den Schieber 23a vorsieht. In diesem Fall muß man allerdings die Teilmengen in einem besonderen Behälter auffangen.

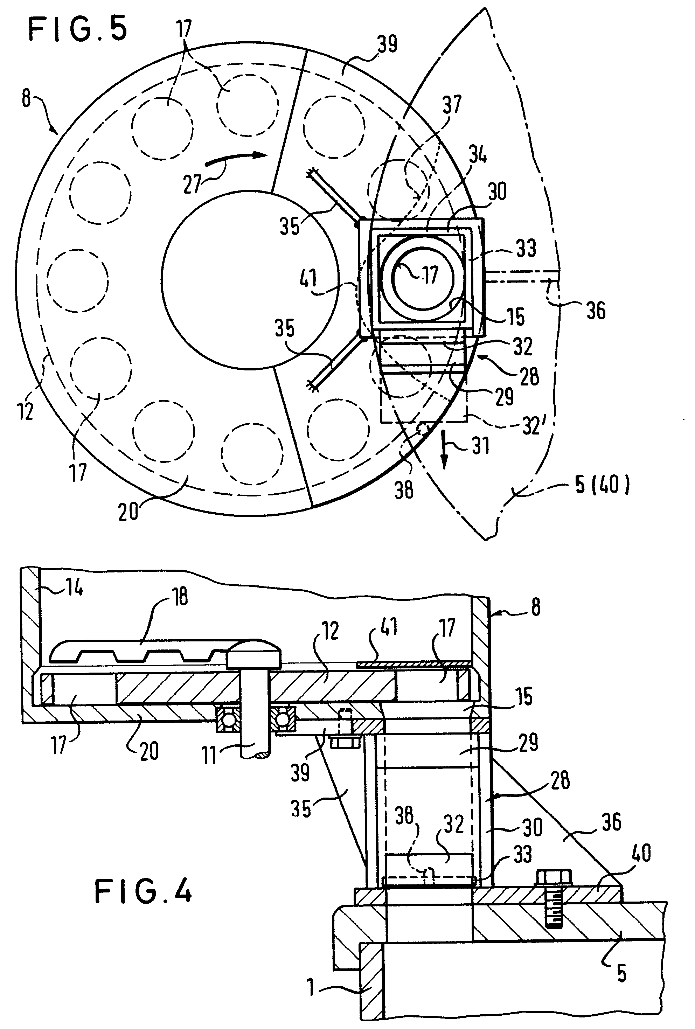

Besonders vorteilhaft ist das Ausführungsbeispiel der erfindungsgemäßen Entnahmeeinrichtung nach den Fig. 4 und 5.

Bei der in den Fig. 4 und 5 gezeigten Einrichtung ist der in Form eines schrägen Rohrstutzens 22 mit Deckel 23 und/oder Schieber 23a ausgebildete Sammelbehälter durch eine Art Schubfach 28 ersetzt, welches mittels des Griffes 29 aus dem quadratischen Schacht 30 in Richtung des Pfeiles 31 entfernbar ist. Auch der Boden des Schubfaches 28 läßt sich entfernen. Er ist in Form eines in den Seitenwänden des Schubfaches 28 in Nuten 33 geführten Schiebers 32 ausgebildet. Die Passung des Schiebers 32 in den seitlichen Führungsnuten 33 und in dem vorderen Schlitz 34 in den senkrechten Wänden des Schubfaches 28 ist so, daß der Boden bei Entnahme des Schubfaches 28 mittels des Griffes 29 unter Reibschluß im Schubfach verbleibt und so das Schubfach mit Boden zur Probeentnahme ohne weiteres aus dem Schacht 30 entnehmbar ist. Der Schieber 32 läßt sich jedoch, wenn man das Schubfach 28 im Schacht 30 beläßt, indem man auf den Griff 29 den entsprechenden Druck ausübt, ohne weiteres aus den seitlichen Führungsnuten 33 und dem Schlitz 34 bis in seine Offenstellung 32' herausziehen. In diesem Zustand ist das Schubfach 28 unten offen und man hat einen durchgehenden Schacht, durch welchen im Normalbetrieb der Dosierstation 8 der Zusatzstoff 16 in den Mischtrichter 1 dosiert wird.

Es versteht sich, daß die Dosierstation 8 um die Höhe der Entnahmevorrichtung gegenüber dem Deckel des Mischtrichters 1 nach oben versetzt angeordnet werden muß, um so Platz für den Schacht 30 bzw. das darin geführte Schubfach 28 zu schaffen. Eine solche Entnahmevorrichtung kann als autonomes Bauteil mit entsprechenden Decken- und Bodenplatten 39, 40 ausgestattet sein, die ihrerseits am Boden 20 der Dosierstation 8 bzw. dem Deckel 5 des Mischbehälters befestigt werden können und über Winkelabstützungen 35, 36 mit den Wänden des Schachtes 30 verbunden sind. Die Bodenplatte 40 trägt zweckmäßigerweise einen Anschlag 38 zur Begrenzung der Bewegung des Schiebers 32 des Schubfaches 28, um diesen Schieber unverlierbar an der seitlichen Nut 33 zu halten.

In dem in den Fig. 4, 5 gezeigten Ausführungsbeispiel kann der Schieber 32 bis zu dem auf der Platte 40 befestigten Anschlag 38 in seine Offenstellung bewegt werden. Zur besseren Führung des Schiebers können die Seitenwände des Schubfaches 28 unten in Richtung des Pfeiles 31 verbreitert sein, um den Schieber 32 auch in seiner Offenstellung unverlierbar im Schubfach 28 zu führen.

Der Schacht 30 hat jeweils an der Seite keine Wand bzw. Öffnung für das Schubfach 28, an der durch die baulichen Gegebenheiten der Dosierstation und/oder des Mischbehälters die beste Zugänglichkeit zu dem Schubfach 28 gegeben ist. In den Fig. 4, 5 ist das Schubfach 28 beispielsweise seitlich in den Schacht 30 eingesetzt.

Die Entnahmeeinrichtung gemäß den Fig. 4, 5 hat gegenüber dem Ausführungsbeispiel nach den Fig. 3 und 4 den Vorteil, daß an der Dosierstation 8 bzw. am Boden 20 des Behälters 14 der Dosierstation keine Änderungen vorgenommen werden müssen. Die Dosierstation 8 wird lediglich um die Höhe der Entnahmeeinrichtung gegenüber dem Mischbehälter angehoben. Während bei der Entnahmeeinrichtung nach den Fig. 2, 3 neben der Auslaßöffnung 15 im Boden 20 eine weitere Auslaßöffnung 21 für die Entnahmeeinrichtung vorgesehen ist, entleert sich der Behälter 14 bei diesem Ausführungsbeispiel durch die übliche Öffnung 15 im Boden 20 wahlweise in die Entnahmevorrichtung, die das Schubfach 28 bei eingesetztem Schieber 32 darstellt oder aber direkt in den Mischbehälter 1, wenn nämlich der Schieber 32 in seine Offenstellung 32' bewegt ist.

## Patentansprüche

1. Einrichtung zum Dosieren von körnigen oder pulverförmigen Stoffen in den Mischbehälter (1) einer Kunststoffverarbeitungsmaschine mit einer Dosierstation (8), die einen Behälter (14) mit Bodenplatte (20), eine unmittelbar über der Bodenplatte (20) angeordnete, mit Durchbrechungen (17) zur Aufnahme des zu dosierenden Stoffes versehene, drehbare Dosierscheibe (12) sowie eine Durchtrittsöffnung (15) für die Teilmengen des Stoffes in der Bodenplatte (20) des Behälters (14) aufweist, wobei die Durchtrittsöffnung (15) unter einer Abdeckung (19) angeordnet ist und mit einer Durchtrittsöffnung (13) im Deckel (5) des Mischbehälters (1) fluchtet, dadurch gekennzeichnet, daß zur Entnahme von Teilmengen in der Bodenplatte (20) des Behälters (14) der Dosierstation (8) in Drehrichtung der Dosierscheibe (12) vor der Durchtrittsöffnung (15) für die Teilmengen des Stoffes (16), unter der gleichen Abdeckung (19) und außerhalb des Deckels (5) des Mischbehälters (1) eine weitere Durchtrittsöffnung (21) vorgesehen ist, an die eine Entnahmevorrichtung in Form eines mit mindestens einem Deckel (23; 23a) verschließbaren Rohrstutzens (22) ansetzbar ist.

2. Einrichtung zum Dosieren von körnigen oder pulverförmigen Stoffen in den Mischbehälter (1) einer Kunststoffverarbeitungsmaschine mit einer Dosierstation (8), die einen Behälter (14) mit Bodenplatte (20), eine unmittelbar über der Bodenplatte (20) angeordnete, mit Durchbrechungen (17) zur Aufnahme des zu dosierenden Stoffes versehene, drehbare Dosierscheibe (12) sowie eine Durchtrittsöffnung (15) für die Teilmengen des Stoffes in der Bodenplatte (20) des Behälters (14) aufweist, wobei die Durchtrittsöffnung (15) unter einer Abdeckung (41) angeordnet ist und mit einer Durchtrittsöffnung im Deckel des Mischbehälters fluchtet, dadurch gekennzeichnet, daß zur Entnahme von Teilmengen zwischen der Durchtrittsöffnung im Deckel (5) des Mischbehälters (1) und der Öffnung (15) in der Bodenplatte (20) des Behälters (14) der Dosierstation (8) eine Entnahmevorrichtung in Form eines in einem Schacht (30) geführten Schubfaches (28) mit entfernbarem Boden angeordnet ist, wobei der entfernbare Boden von einem Schieber (32) gebildet ist, der reibschlüssig in den Seitenwänden des Schubfaches (28) geführt ist.

3. Einrichtung nach Anspruch 2, dadurch gekennzeichnet, daß der Schacht (30) außen mit Rippen (35, 36) versteift ist, daß die Führung (33) für den Schieber (32) in den Seitenwänden des Schubfaches (28) sich über den Schachtbereich nach außen erstreckt und auf einer auf dem Deckel (5) des Mischbehälters (1) befestigbaren Bodenplatte (40) ein Anschlag (38) für den Schieber (32) in seiner Offenstellung (32') angeordnet ist.

## Claims

1. Arrangement for dispensing granular or powdery substances into the mixing container (1) of a synthetic material processing machine having a dispensing station (8) which has a container (14) with a floor plate (20), a rotatable dispensing plate (12) arranged directly above the floor plate (20) and provided with perforations (17) for receiving the substance to be dispensed, and an opening (15) for the components of the substance in the floor plate (20) of the container (14), the opening (15) being arranged below a cover (19) and being aligned with an opening (13) in the lid (5) of the mixing container (1), characterised in that for receiving of components a further opening (21) is provided in the floor plate (20) of the container (14) of the dispensing station (8) in the direction of rotation of the dispensing plate (12) in front of the opening (15) for the components of the substance (16), beneath the same lid (19) and outside the cover (5) of the mixing container (1), on which further opening (21) an extracting device is attachable in the form of a pipe piece (22) closable by at least one cover (23; 23).

2. Arrangement for dispensing of granular or powdery substances into the mixing container (1) of a synthetic material processing machine having a dispensing station (8) which has a container (14) with a floor plate (20), a rotatable dispensing plate (12) arranged directly above the floor plate (20) and provided with perforations (17) for receiving the substance to be dispensed, and an opening (15) for the components of the substance in the floor plate (20) of the container (14), the opening (15) being arranged below a cover (41) and being aligned with an opening in the lid of the mixing container, characterised in that, for receiving components, there is arranged in the lid (5) of the mixing container (1) and the opening (15) in the floor plate (20) of the container (14) of the dispensing station (8), a receiving device in the form of a push-in compartment (28) which has a removable floor and is guided in a casing (30), the removable floor being formed by a slide (32) which is guided frictionally in the side walls of the push-in container (28).

3. Arrangement according to claim 2 characterised in that the casing (30) is externally stiffened with ribs (35, 36), in that the guidance (33) for the slide (32) extends in the side walls of the push-in container (28) across the casing region and outwardly, and, on a floor plate (40) securable on the lid (5) of the mixing container (1), a stop (38) is arranged for the slide (32) in its open position (32').

## Revendications

1. Dispositif pour le dosage de matériaux granuleux ou pulvérulents dans le mélangeur (1) d'une machine de traitement de matières plastiques comprenant une installation de dosage (8) constituée par un récipient (14) comportant une plaque de fond (20), un disque de dosage (12) rotatif, placé immédiatement au-dessus de la plaque de fond (20) et comportant des orifices (17) dans lesquels pénètre le matériau à doser, et une ouverture (15) pour le passage de quantités partielles de matériau ménagée dans la plaque de fond (20) du récipient (14), l'ouverture de passage (15) étant placée sous une pièce couvrante (19) et se trouvant dans le prolongement d'une ouverture de passage (13) ménagée dans le couvercle (5) du mélangeur (1), caractérisé en ce que, pour le prélèvement de quantités partielles, le dispositif comporte, dans la plaque de fond (20) du récipient (14) de l'installation de dosage (8), en avant, dans le sens de la rotation du disque de dosage (12), de l'ouverture (15) permettant le passage de quantités partielles de matériau d'addition (16) sous la même pièce couvrante (19) et à l'extérieur du couvercle (5) du mélangeur (1) une autre ouverture de passage (21) à laquelle peut s'adapter un dispositif de prélèvement ayant la forme d'une tubulure (22) pouvant être fermée au moins par un couvercle (23; 23a).

2. Dispositif pour le dosage de matériaux granuleux ou pulvérulents dans le mélangeur (1) d'une machine de traitement de matières plastiques comprenant une installation de dosage (8) constituée par un récipient (14) comportant une plaque de fond (20), und disque de dosage (12) rotatif placé immédiatement au-dessus de la plaque de fond (20) et comportant des orifices (17) dans lesquels peut pénétrer le matériau à doser, et une ouverture (15) pour le passage de quantités partielles de matériau ménagée dans la plaque de fond (20) du récipient (14), l'ouverture de passage (15) étant placée sous une pièce couvrante (41) et se trouvant dans le prolongement d'une ouverture de passage ménagée dans le couvercle du mélangeur, caractérisé en ce que, pour le prélèvement de quantités partielles, le dispositif comporte entre l'ouverture de passage ménagée dans le couvercle (5) du mélangeur (1) et l'ouverture (15) ménagée dans la plaque de fond (20) du récipient (14) de l'installation de dosage (8) un dispositif de prélèvement ayant la forme d'un tiroir (28) guidé dans un cadre (30) et comportant un fond amovible, ce fond amovible étant formé par un registre (32) qui est guidé, en assurant une fermeture par frottement, dans les parois latérales du tiroir (28).

3. Dispositif selon la revendication 2, caractérisé en ce que le cadre (30) est renforcé extérieurement par des nervures (35, 36) et en ce que le dispositif de guidage (33) du registre (32) dans les parois latérales du tiroir (28) s'étend au-delà de la zone du cadre vers l'extérieur et que la plaque de fond (20) qui peut être fixée sur le couvercle (5) du mélangeur (1) porte une butée (38) contre laquelle le registre (32) s'applique dans sa position d'ouverture (32').

# FIG.1

# FIG.3

# FIG. 2

0 044 980

FIG.5

FIG.4

11